# EUROPEAN PATENT APPLICATION

(11) **EP 4 752 980 A1**
(43) Date of publication of application: **03.06.2026**
(21) Application number: 23946706.1
(22) Date of filing: 26.07.2023
(51) Int. Cl.: H01M 4/62, H01M 4/13, H01M 4/139, H01M 10/0562

(54) **POSITIVE ELECTRODE FOR ALL-SOLID-STATE BATTERY**

(71) Applicant: Nissan Motor Co., Ltd., Yokohama-shi, Kanagawa 221-0023 (JP)
(72) Inventor: DOI, Shotaro, Atsugi-shi, Kanagawa 243-0123 (JP); SHIBAMURA, Ryuuji, Atsugi-shi, Kanagawa 243-0123 (JP); YOSHITOMI, Hiroaki, Atsugi-shi, Kanagawa 243-0123 (JP); UEDA, Junji, Atsugi-shi, Kanagawa 243-0123 (JP)
(74) Representative: Osha BWB
(86) International application number: PCT/JP2023/027441
(87) International publication number: WO 2025/022624

(57) **Abstract**

An object of the present invention is to provide a positive electrode for an all-solid-state battery, which has excellent strength and can improve cycle durability of a battery.

According to the present invention, there is provided a positive electrode for an all-solid-state battery including a positive electrode active material layer containing a positive electrode active material, a solid electrolyte, a binder containing polytetrafluoroethylene, and a fibrous conductive aid, in which the positive electrode active material layer includes a composite of a film made of the polytetrafluoroethylene and the fibrous conductive aid.

## Description

### TECHNICAL FIELD

The present invention relates to a positive electrode for an all-solid-state battery.

### BACKGROUND ART

In recent years, research and development on an all-solid-state battery using an oxide-based or sulfide-based solid electrolyte as an electrolyte have been actively conducted. The solid electrolyte is a material mainly composed of an ion conductor capable of ion conduction in a solid. For this reason, in all-solid-state batteries, there is an advantage that various problems caused by a flammable organic electrolyte solution, as in conventional liquid-based batteries using a nonaqueous electrolyte do not occur in principle. In addition, in general, when a positive electrode material having a high potential and a large capacity and a negative electrode material having a large capacity are used, the power density and the energy density of the battery can be significantly improved.

In typical all-solid-state batteries, a positive electrode has a configuration in which a positive electrode active material layer is disposed on a surface of a positive electrode current collector. In addition, the positive electrode active material layer contains, in addition to the positive electrode active material, a conductive aid for improving conductivity in the positive electrode active material layer, a solid electrolyte for improving lithium ion conductivity in the positive electrode active material layer, and a binder for binding particles of the positive electrode active material, the conductive aid, and the solid electrolyte together or binding these particles to a positive electrode current collector.

Here, WO 2022/050252 A discloses that a polytetrafluoroethylene resin having a predetermined fine fiber structure is used as a binder contained in a mixture for all-solid-state batteries.

### SUMMARY OF INVENTION

However, according to the study of the present inventors, it has been found that even in a case where the binder described in WO 2022/050252 A is used, durability is low and strength is insufficient.

Therefore, an object of the present invention is to provide a positive electrode for an all-solid-state battery, which has excellent strength and can improve cycle durability of a battery.

The present inventors have conducted intensive studies in order to solve the above problems. As a result, it was found that the above problems can be solved by using a fibrous conductive aid and forming a specific composite structure of the fibrous conductive aid and polytetrafluoroethylene in a positive electrode active material layer. Further, it was found that a positive electrode active material layer containing the composite is obtained by rolling a positive electrode mixture containing fibrous polytetrafluoroethylene and a fibrous conductive aid while heating, and the present invention has been completed.

That is, one aspect of the present invention is a positive electrode for an all-solid-state battery including a positive electrode active material layer containing a positive electrode active material, a solid electrolyte, a binder containing polytetrafluoroethylene, and a fibrous conductive aid, in which the positive electrode active material layer includes a composite of a film made of the polytetrafluoroethylene and the fibrous conductive aid.

In addition, one aspect of the present invention is a method for producing a positive electrode for an all-solid-state battery including a positive electrode active material layer containing a positive electrode active material, a solid electrolyte, a binder containing polytetrafluoroethylene, and a fibrous conductive aid, the method including a step of rolling a positive electrode mixture containing the positive electrode active material, the solid electrolyte, the fibrous conductive aid, and the polytetrafluoroethylene capable of fibrillation while heating to 40°C or higher.

### BRIEF DESCRIPTION OF DRAWINGS

Fig. 1 is a perspective view illustrating an appearance of a flat-laminate type all-solid-state lithium secondary battery as an embodiment of an all-solid-state battery according to the present invention.
Fig. 2 is a cross-sectional view taken along line 2-2 illustrated in Fig. 1.
Figs. 3(a) and 3(b) are SEM images of samples after hydrochloric acid treatment of positive electrode active material layers prepared in Comparative Example 2 and Example 2, respectively.

### DESCRIPTION OF EMBODIMENTS

One embodiment of the present invention is a positive electrode for an all-solid-state battery including a positive electrode active material layer containing a positive electrode active material, a solid electrolyte, a binder containing polytetrafluoroethylene, and a fibrous conductive aid, in which the positive electrode active material layer includes a composite of a film made of the polytetrafluoroethylene and the fibrous conductive aid. According to the present embodiment, a positive electrode having excellent strength can be obtained. In addition, cycle durability can be improved in all-solid-state batteries using the positive electrode for an all-solid-state battery of the present embodiment.

Hereinafter, embodiments of the present invention will be described with reference to the drawings, but the technical scope of the present invention should be determined on the basis of the description of claims, and is not limited only to the following embodiments. Note that dimensional ratios in the drawings are exaggerated for convenience of description, and may be different from actual ratios.

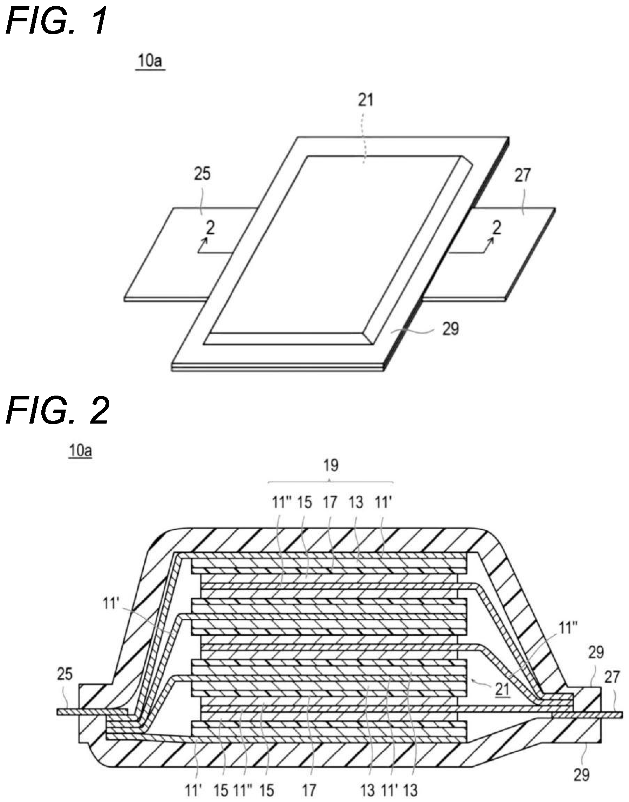

Fig. 1 is a perspective view illustrating an appearance of a flat-laminate type all-solid-state lithium secondary battery as an embodiment of the present invention. Fig. 2 is a cross-sectional view taken along line 2-2 illustrated in Fig. 1. By adopting the laminate type, a battery can be made compact and have a high capacity. Note that, in the present specification, a flat-laminate type all-solid-state lithium secondary battery (hereinafter, also simply referred to as a "laminate type secondary battery") that is not a bipolar type, as shown in Figs. 1 and 2 will be described in detail as an example. However, when viewed in an electrical connection form (electrode structure) inside the secondary battery according to the present embodiment, it can be applied to both a non-bipolar type (internal parallel connection type) battery and a bipolar type (internal series connection type) battery.

As shown in Fig. 1, a laminate type secondary battery 10a has a flat rectangular shape, and a negative electrode current collecting plate 25 and a positive electrode current collecting plate 27 for extracting electric power are drawn out from both side portions thereof. A power generating element 21 is enclosed by a battery outer casing material (laminate film 29) of the laminate type secondary battery 10a, and a periphery thereof is heat-sealed, and the power generating element 21 is sealed in a state in which the negative electrode current collecting plate 25 and the positive electrode current collecting plate 27 are drawn to the outside. Note that, drawing out the current collecting plates (25, 27) shown in Fig. 1 is not limited to that shown in Fig. 1, for example, the negative electrode current collecting plate 25 and the positive electrode current collecting plate 27 may be drawn out from the same side, or each of the negative electrode current collecting plate 25 and the positive electrode current collecting plate 27 may be divided into a plurality of portions and drawn out from respective sides.

As shown in Fig. 2, the power generating element 21 of the laminate type secondary battery 10a of the present embodiment has a configuration in which a negative electrode in which a negative electrode active material layer 13 containing lithium metal is disposed on both surfaces of a negative electrode current collector 11', a solid electrolyte layer 17, and a positive electrode in which a positive electrode active material layer 15 containing a lithium transition metal composite oxide is disposed on both surfaces of a positive electrode current collector 11" are laminated during charging. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. As a result, the adjacent negative electrode, solid electrolyte layer, and positive electrode constitute one single battery layer 19. Therefore, it can be said that the laminate type secondary battery 10a shown in Fig. 2 has a configuration in which a plurality of single battery layers 19 are laminated to be electrically connected in parallel.

The negative electrode current collecting plate 25 and a positive electrode current collecting plate 27, which are electrically connected to respective electrodes (the negative electrode and the positive electrode), are respectively attached to the negative electrode current collector 11' and the positive electrode current collector 11", and are sandwiched between ends of the laminate film 29 and led out of the laminate film 29. The negative electrode current collecting plate 25 and the positive electrode current collecting plate 27 may be attached to the negative electrode current collector 11' and the positive electrode current collector 11" of respective electrodes by ultrasonic welding, resistance welding, or the like via a negative electrode terminal lead and a positive electrode terminal lead (not shown), respectively, as necessary.

In the laminate type secondary battery 10a according to the present embodiment, it is preferable that the power generating element 21 sealed in the laminate film 29 illustrated in Fig. 1 and the power generating element 21 sealed in the laminate film 29 are sandwiched between two plate-like members and further fastened using a fastening member. As a result, the plate-like members and the fastening member function as a pressing member that presses (restrains) the power generating element 21 in a stacking direction thereof. Examples of the plate-like member include a metal plate, a resin plate, and the like. Examples of the fastening member include a bolt, a nut, and the like. However, the pressing member is not particularly limited as long as it is a member that can press the power generating element 21 in a stacking direction thereof. Typically, a combination of a plate formed of a material having rigidity such as a plate-like member and the above-described fastening member is used as the pressing member. As the fastening member, not only the bolt and the nut but also a tension plate or the like that fixes the end of the plate-like member so as to restrain the power generating element 21 in the stacking direction thereof may be used. A lower limit of the load applied to the power generating element 21 (restraint pressure in the stacking direction of the power generating elements) is, for example, 0.1 MPa or more, preferably 1 MPa or more, more preferably 3 MPa or more, and still more preferably 5 MPa or more. An upper limit of the restraint pressure in the stacking direction of the power generating element is, for example, 100 MPa or less, preferably 70 MPa or less, more preferably 40 MPa or less, and still more preferably 10 MPa or less.

Hereinafter, main components of the above-described laminate type secondary battery 10a will be described.

[Current Collector] The current collectors (the negative electrode current collector 11' and the positive electrode current collector 11") are conductive members that function as a flow path for electrons emitted from the positive electrode toward an external load or flowing from the power source toward the positive electrode in association with the progress of a battery reaction (charge-discharge reaction). A material constituting the current collector is not particularly limited, and for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. Further, a foil in which a metal surface is coated with aluminum may be used. Among them, aluminum, stainless steel, copper, and nickel are preferable from the viewpoint of electron conductivity, battery operating potential, adhesion of the active material, and the like.

In addition, examples of the latter resin having conductivity include a resin obtained by adding a conductive filler to a conductive polymer material or a non-conductive polymer material as necessary.

Note that, the current collector may have a single-layer structure made of a single material, or may have a laminated structure in which layers made of these materials are appropriately combined. From the viewpoint of weight reduction of the current collector, it is preferable to include at least a conductive resin layer made of a resin having conductivity. In addition, from the viewpoint of blocking the movement of lithium ions between single battery layers, a metal layer may be provided on a part of the current collector. Furthermore, if the negative electrode active material layer and the positive electrode active material layer described above have conductivity by themselves and can exhibit a current collecting function, a current collector as a member different from these active material layers may not be used. In such an embodiment, the above-described negative electrode active material layer directly constitutes a negative electrode, and the above-described positive electrode active material layer directly constitutes a positive electrode.

A thickness of the current collector is not particularly limited, and is, for example, 10 to 100 µm.

[Negative Electrode Active Material Layer] The negative electrode active material layer 13 contains a negative electrode active material, and may contain a solid electrolyte, a binder, and a conductive aid as necessary. The kind of the negative electrode active material is not particularly limited, and examples thereof include a carbon material, a metal oxide, and a metal active material. In addition, as the negative electrode active material, an active material containing lithium may be used. Such a negative electrode active material is not particularly limited as long as it is an active material containing lithium, and examples thereof include lithium-containing alloys in addition to lithium metal. Examples of the lithium-containing alloy include an alloy of Li and at least one of In, Al, Si, Sn, Mg, Au, Ag, and Zn. The negative electrode active material preferably contains lithium metal, a lithium-containing alloy, a silicon-based negative electrode active material, or a tin-based negative electrode active material, and particularly preferably contains lithium metal or a lithium-containing alloy. Note that in a case where a lithium metal or a lithium-containing alloy is used as the negative electrode active material, the lithium secondary battery is preferably a so-called lithium-deposition type in which lithium metal as a negative electrode active material is deposited on a negative electrode current collector in a charging process. In this case, since the layer made of lithium metal deposited on the negative electrode current collector in the charging process becomes the negative electrode active material layer, the thickness of the negative electrode active material layer increases as the charging process proceeds, and the thickness of the negative electrode active material layer decreases as the discharging process proceeds. The negative electrode active material layer may not be present during full discharge, but in some cases, a negative electrode active material layer made of a certain amount of lithium metal may be disposed during full discharge. In addition, the thickness of the negative electrode active material layer (lithium metal layer) during full charge is not particularly limited, and is usually 0.1 to 1000 µm.

[Solid Electrolyte Layer] The solid electrolyte layer 17 is a layer interposed between the positive electrode active material layer and the negative electrode active material layer and essentially containing a solid electrolyte.

Examples of the solid electrolyte include a sulfide solid electrolyte and an oxide solid electrolyte, and a sulfide solid electrolyte is preferable. Note that, in the present specification, the solid electrolyte refers to a material mainly composed of an ion conductor capable of ion conduction in a solid, and particularly refers to a material having a lithium ion conductivity at normal temperature (25°C) of 1 × 10⁻⁵ S/cm or more, and the lithium ion conductivity is preferably 1 × 10⁻⁴ S/cm or more. Here, the value of the ion conductivity can be measured by an AC impedance method.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (here, m and n are positive numbers, and Z is any of Ge, Zn, and Ga), Li₂S-GeS₂, Li₂S-SiS₂-Li₃PO₄, Li₂S-SiS₂-LiₓMO_{y} (here, x and y are positive numbers, and M is any of P, Si, Ge, B, Al, Ga, and In), and the like. Note that, the description of "Li₂S-P₂S₅" means a sulfide solid electrolyte obtained using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. In addition, examples of the sulfide solid electrolyte having a Li₄P₂S₇ skeleton include a Li-P-S-based solid electrolyte referred to as LPS (for example, Li₇P₃S₁₁). In addition, as the sulfide solid electrolyte, for example, LGPS represented by Li₍₄₋ₓ₎Ge₍₁₋ₓ₎PₓS₄ (x satisfies 0 < x < 1) or the like may be used. Among them, the sulfide solid electrolyte is preferably a sulfide solid electrolyte containing P element, and the sulfide solid electrolyte is more preferably a material containing Li₂S-P₂S₅ as a main component. Furthermore, the sulfide solid electrolyte may contain halogen (F, Cl, Br, or I). In one preferred embodiment, the sulfide solid electrolyte contains Li₆PS₅X (here, X is Cl, Br or I, and is preferably Cl).

Examples of the oxide solid electrolyte include a compound having a NASICON-type structure, and the like. Examples of the compound having a NASICON-type structure include a compound (LAGP) represented by the general formula Li₁₊ₓAlₓGe₂₋ₓ(PO₄)₃ (0 ≤ x ≤ 2), a compound (LATP) represented by the general formula Li₁₊ₓAlₓTi₂₋ₓ(PO₄)₃ (0 ≤ x ≤ 2), and the like. In addition, other examples of the oxide solid electrolyte include LiLaTiO (for example, Li_{0.34}La_{0.51}TiO₃), LiPON (for example, Li_{2.9}PO_{3.3}N_{0.46}), LiLaZrO (for example, Li₇La₃Zr₂O₁₂), and the like.

Examples of the shape of the solid electrolyte include a particle shape such as a perfect spherical shape and an elliptical spherical shape, a thin film shape, and the like. In a case where the solid electrolyte has the particle shape, an average particle diameter (D50) thereof is not particularly limited, and is preferably 40 µm or less, more preferably 20 µm or less, and still more preferably 10 µm or less. On the other hand, the average particle diameter (D50) is preferably 0.01 µm or more, and more preferably 0.1 µm or more.

The solid electrolyte layer may further contain a binder in addition to the solid electrolyte described above. The binder is not particularly limited, and examples thereof include thermoplastic polymers such as a polybutylene terephthalate, a polyethylene terephthalate, a polyvinylidene fluoride (PVDF) (including compounds in which hydrogen atoms are substituted with other halogen elements), a polyethylene, a polypropylene, a polymethylpentene, a polybutene, a polyether nitrile, a polytetrafluoroethylene (PTFE), a polyacrylonitrile, a polyimide, a polyamide, an ethylene-vinyl acetate copolymer, a polyvinyl chloride, a styrene-butadiene rubber (SBR), an ethylene-propylene-diene copolymer, a styrene-butadiene-styrene block copolymer and a hydrogenated product thereof, a styrene-isoprene-styrene block copolymer and a hydrogenated product thereof; fluororesins such as a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), a polychlorotrifluoroethylene (PCTFE), an ethylene-chlorotrifluoroethylene copolymer (ECTFE), and a polyvinyl fluoride (PVF); vinylidene fluoride-based fluororubbers such as a vinylidene fluoride-hexafluoropropylene fluororubber (VDF-HFP fluororubber), a vinylidene fluoride-hexafluoropropylene-tetrafluoroethylene fluororubber (VDF-HFP-TFE fluororubber), a vinylidene fluoride-pentafluoropropylene fluororubber (VDF-PFP fluororubber), a vinylidene fluoride-pentafluoropropylene-tetrafluoroethylene fluororubber (VDF-PFP-TFE fluororubber), a vinylidene fluoride-perfluoromethyl vinyl ether-tetrafluoroethylene fluororubber (VDF-PFMVE-TFE fluororubber), and a vinylidene fluoride-chlorotrifluoroethylene fluororubber (VDF-CTFE fluororubber); and an epoxy resin, a carboxymethyl cellulose, and the like. Among them, polyimide, styrene-butadiene rubber, carboxymethyl cellulose, polypropylene, polytetrafluoroethylene, polyacrylonitrile, and polyamide are more preferable.

The thickness of the solid electrolyte layer varies depending on the configuration of the intended all-solid-state battery, and is, for example, preferably within a range of 0.1 to 1000 µm, and more preferably 10 to 40 µm.

### (Positive Electrode Active Material Layer)

The positive electrode active material layer contains a positive electrode active material, a solid electrolyte, a binder containing polytetrafluoroethylene (PTFE), and a fibrous conductive aid. Moreover, the positive electrode active material layer has a structure including a composite of a film made of PTFE and a fibrous conductive aid.

### (Positive Electrode Active Material)

The positive electrode active material is not particularly limited as long as it is a material capable of releasing lithium ions in the charging process of the all-solid-state battery and storing lithium ions in the discharging process. An example of such a positive electrode active material includes a material containing M1 element and O element, and the M1 element contains at least one element selected from the group consisting of Li, Mn, Ni, Co, Cr, Fe, and P. Examples of such a positive electrode active material include layered rock salt-type active materials such as LiCoO₂, LiMnO₂, LiNiO₂ and Li(Ni-Mn-Co)O₂, spinel-type active materials such as LiMn₂O₄ and LiNi_{0.5}Mn_{1.5}O₄, olivine-type active materials such as LiFePO₄ and LiMnPO4, Si-containing active materials such as Li₂FeSiO₄ and Li₂MnSiO₄, and the like. In addition, examples of the oxide active material other than those described above include Li₄Ti₅O₁₂ and LiVO₂.

Furthermore, the positive electrode active material may contain a sulfur element. The positive electrode active material containing a sulfur element is not particularly limited, and examples thereof include particles or thin films of an organic sulfur compound or an inorganic sulfur compound in addition to elemental sulfur (S), and any material may be used as long as it can release lithium ions during charging and store lithium ions during discharging by utilizing an oxidation-reduction reaction of sulfur. Examples of the organic sulfur compound include disulfide compounds, sulfur-modified polyacrylonitrile, sulfur-modified polyisoprene, rubeanic acid (dithiooxamide), polysulfide carbon, and the like. Among them, disulfide compounds, sulfur-modified polyacrylonitrile, and rubeanic acid are preferable, and sulfur-modified polyacrylonitrile is particularly preferable. The disulfide compound more preferably has a dithiobiurea derivative, a thiourea group, a thioisocyanate, or a thioamide group. On the other hand, the inorganic sulfur compound is preferable because it is excellent in stability, and specific examples thereof include elemental sulfur (S), S-carbon composite, Li₂S, TiS₂, TiS₃, TiS₄, NiS, NiS₂, CuS, FeS₂, MoS₂, MoS₃, and the like. Among them, S, Li₂S, S-carbon composite, TiS₂, TiS₃, TiS₄, FeS₂, and MoS₂ are preferable, elemental sulfur (S), Li₂S, TiS₂, and FeS₂ are more preferable, and elemental sulfur (S) or Li₂S is particularly preferable from the viewpoint of high capacity. Note that, as the elemental sulfur (S), α sulfur, β sulfur, or γ sulfur having an S8 structure can be used. These elemental sulfurs (S) store lithium ions during discharging and exist in the positive electrode active material layer in the form of a (poly)sulfide of lithium.

In some cases, two or more kinds of positive electrode active materials may be used in combination. Note that, it is needless to say that a positive electrode active material other than the above may be used.

The shape of the positive electrode active material is preferably a particle shape. In a case where the positive electrode active material has the particle shape, an average particle diameter (D50) thereof is preferably within a range of 1 nm to 100 µm, more preferably within a range of 10 nm to 50 µm, still more preferably within a range of 100 nm to 20 µm, and particularly preferably within a range of 1 to 20 µm. Note that, the average particle diameter (D50) of the positive electrode active material is determined as an average value of particle diameters of the positive electrode active material observed in several to several tens of fields of view in a cross section of the positive electrode active material layer using a scanning electron microscope (SEM).

A content of the positive electrode active material in the positive electrode active material layer is not particularly limited, and is preferably within a range of 30 to 99 mass%, more preferably within a range of 40 to 90 mass%, and still more preferably within a range of 50 to 85 mass%.

### (Solid Electrolyte)

A specific embodiment of the solid electrolyte contained in the positive electrode active material layer is not particularly limited, and the solid electrolyte and a preferred embodiment thereof exemplified in the section of the solid electrolyte layer can be similarly adopted. In some cases, a solid electrolyte other than the solid electrolyte described above may be used in combination.

The content of the solid electrolyte in the positive electrode active material layer is, for example, preferably within a range of 1 to 60 mass%, and more preferably within a range of 10 to 50 mass%.

### (Fibrous Conductive Aid)

The fibrous conductive aid can contribute to improvement in conductivity (reduction in resistance) in the active material layer. In the present specification, the "fibrous conductive aid" refers to a conductive aid having an aspect ratio of 10 or more and a minimum Feret diameter of 0.2 µm or less in an observation image when a cross section of the positive electrode active material layer is observed using a scanning electron microscope (SEM). Note that, the aspect ratio is calculated by dividing the maximum Feret diameter by the minimum Feret diameter. The maximum Feret diameter is a maximum distance between two parallel straight lines in a case where the outline of the conductive aid is sandwiched between the straight lines, and the minimum Feret diameter is a minimum distance between two parallel straight lines in a case where the outline of the conductive aid is sandwiched between the straight lines. The electron conductivity of the fibrous conductive aid is preferably 1 S/m or more, more preferably 1 × 10² S/m or more, still more preferably 1 × 10⁴ S/m or more, and still more preferably 1 × 10⁵ S/m or more. An upper limit value of the electron conductivity of the fibrous conductive aid is not particularly limited, and is usually 1 × 10⁷ S/m or less.

The fibrous conductive aid is preferably fibrous carbon because it is lightweight and has excellent conductivity. The kind of fibrous carbon is not particularly limited as long as it has the above-described shape, and examples thereof include carbon fibers (carbon nanofibers), graphene, and carbon nanotubes (single-walled carbon nanotubes and multi-walled carbon nanotubes). Among them, carbon fibers (carbon nanofibers) and carbon nanotubes are preferable. Only one kind of fibrous carbon may be used singly, or two or more kinds thereof may be used in combination.

An average fiber length of the fibrous conductive aid contained in the positive electrode active material layer is not particularly limited, and is, for example, 5 µm or more, more preferably 7 µm or more, and still more preferably 10 µm or more. Within the above range, a tougher composite can be obtained. In addition, it is preferable because an electron conduction path can be sufficiently obtained, the utilization factor of the positive electrode active material can be improved, and the capacity retention rate can be improved. An upper limit value of the average fiber length is not particularly limited, and is, for example, 100 µm or less. Note that the average fiber length of the fibrous conductive aid can be determined as an average value of fiber lengths of the fibrous conductive aid observed by photographing a cross section of the positive electrode active material layer with a scanning electron microscope (SEM) for about 10 fields of view.

Note that, in the positive electrode active material layer, the average fiber length of the fibrous conductive aid is preferably larger than the average particle diameter (D50) of the positive electrode active material. As a result, a tougher composite can be obtained. In addition, it is possible to prevent the electron conduction path of the positive electrode active material from being cut along with expansion and contraction of the positive electrode active material during charging, and it is possible to maintain an electronic contact point between the positive electrode active materials. Therefore, the effect of the present invention can be more remarkably obtained. A ratio of the average fiber length of the fibrous conductive aid to the average particle diameter (D50) of the positive electrode active material is, for example, 1.1 or more, preferably 2 or more, more preferably 3 or more, and still more preferably 4 or more. An upper limit value of the ratio of the average fiber length of the fibrous conductive aid to the average particle diameter (D50) of the positive electrode active material is not particularly limited, and is, for example, 100 or less.

A content of the fibrous conductive aid in the positive electrode active material layer is preferably 1 mass% or more and 10 mass% or less, and more preferably 2 mass% or more and 5 mass% or less.

The positive electrode active material layer may further contain a conductive aid other than the fibrous conductive aid (non-fibrous conductive aid) in addition to the fibrous conductive aid. A shape of the particles of the non-fibrous conductive aid is not particularly limited, and may be any shape such as a powder shape, a spherical shape, a rod shape, a needle shape, a plate shape, a column shape, an irregular shape, a flake shape, and a spindle shape. By further using such a conductive aid, the number of contact points for electron conduction increases, so that the resistance of the positive electrode can be further reduced. Examples of such a conductive aid include carbon blacks such as acetylene black, Ketjen black (registered trademark), furnace black, channel black, and thermal black.

In a case where the non-fibrous conductive aid is contained, the ratio of the non-fibrous conductive aid is, for example, more than 0 and less than 50 mass%, preferably 1 to 30 mass%, and more preferably 1 to 10 mass% with respect to the total mass of the conductive aid contained in the positive electrode active material layer.

### (Binder)

The positive electrode active material layer contains polytetrafluoroethylene (PTFE) as a binder. PTFE is a polymer of tetrafluoroethylene, and can be fibrillated (fiberized) by application of a shear force due to kneading. As a result, the positive electrode active material, the solid electrolyte, and the fibrous conductive aid are entangled and held in the fibrous structure of the fibrillated PTFE. On the other hand, it has been reported that PTFE undergoes a crystal phase transition at around 19°C to soften crystals, and there is a dimensional change of a molded article at around this transition temperature, and mechanical properties also change (Thermal Analysis of Powder-Molded Polytetrafluoroethylene Film, Japanese Journal of Polymer Science and Technology (Kobunshi Ronbunshu), Vol. 66, No. 12, pp. 585-590 (Dec., 2009)).

Note that, the polytetrafluoroethylene may include one in which a terminal or a part of a side chain is substituted (modified) with another substituent. In the case of a form in which a terminal or a part of a side chain is substituted (modified) with another substituent, a proportion of structural units in which the terminal or side chain is substituted (modified) with another substituent is preferably 10 mol% or less, and more preferably 5 mol% or less, relative to 100 mol% of all the structural units.

The positive electrode active material layer may contain a binder other than PTFE (other binder). As the other binder, for example, the same form as the binder exemplified in the section of the solid electrolyte layer can be adopted. However, from the viewpoint of further improving the mechanical strength of the positive electrode active material layer, a proportion of the other binder is preferably 10 mass% or less, more preferably 5 mass% or less, still more preferably 3 mass% or less, particularly preferably 1 mass% or less, and most preferably 0 mass% (that is, the other binder is not contained) with respect to the total mass of the binder contained in the positive electrode active material layer.

A content of PTFE in the positive electrode active material layer is not particularly limited, and is, for example, 0.1 to 5 mass%, preferably 0.1 to 3 mass%, more preferably 0.2 to 2 mass%, still more preferably 0.3 to 1.2 mass%, and still more preferably 0.4 to 1 mass% with respect to a total solid content contained in the positive electrode active material layer. Within the above range, the balance between the energy density and the strength is excellent.

### (Composite of Film Made of Polytetrafluoroethylene and Fibrous Conductive Aid)

The positive electrode of the present embodiment has a composite of a film made of polytetrafluoroethylene and a fibrous conductive aid in the positive electrode active material layer.

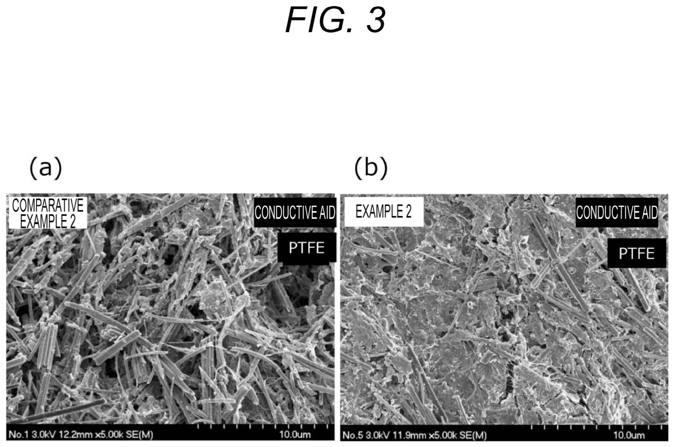

Fig. 3(a) shows an SEM image of a positive electrode active material layer of a conventional positive electrode, and Fig. 3(b) shows an SEM image of a positive electrode active material layer in the positive electrode of the present embodiment. In these images, components other than PTFE and the fibrous conductive aid are removed in order to observe the structure of the composite. As shown in Fig. 3(a), PTFE exists mainly in a fibrous shape in the conventional positive electrode active material layer. In addition, although the fibrous PTFE and the fibrous conductive aid are present in a state of being entangled with each other, it is not a state in which the fibrous conductive aid is embedded in the PTFE, and it is not a state in which the spatial position of the fibrous conductive aid is fixed by the PTFE. Also, film-shaped PTFE is not observed. On the other hand, as shown in Fig. 3(b), in the positive electrode active material layer of the present embodiment, in addition to fibrous PTFE, film-shaped PTFE is observed. The PTFE film is formed in an in-plane direction of the positive electrode active material layer, and the film made of PTFE and the fibrous conductive aid form a composite. In a preferred embodiment, a fibrous conductive aid is embedded in a film made of PTFE. In a preferred embodiment, in the composite, a spatial position of the fibrous conductive aid is fixed by PTFE. In a preferred embodiment, the composite is obtained by kneading a fibrous conductive aid into softened PTFE and then curing the mixture. In a preferred embodiment, the composite has an integrated structure in which the fibrous conductive aid is entangled while the softened PTFE is being crushed. Note that, in the positive electrode of the present embodiment, at least a part of PTFE contained in the positive electrode active material layer may be formed into a film shape to form a composite with the fibrous conductive aid.

A fibrous binder such as fibrillated PTFE is used when an electrode active material layer or a solid electrolyte layer of an all-solid-state secondary battery is prepared by a dry method without using a solvent. In a secondary battery such as a lithium secondary battery, the positive electrode active material expands and contracts with a charge-discharge reaction. In general, the positive electrode active material, the solid electrolyte, and the conductive aid in the positive electrode active material layer are maintained in a state of being in contact with each other. However, when the expansion and contraction of the positive electrode active material is large, a gap is formed between the positive electrode active material and each component, and the positive electrode active material is likely to be isolated from the electron conduction path and/or the ion conduction path, and thus the utilization factor of the positive electrode active material decreases. As a result, the cycle durability of the battery may be insufficient in some cases. Here, when a fibrous conductive aid is used as the conductive aid, as compared with a case where a conductive aid having a shape such as a particle shape is used, even in a case where the positive electrode active material contracts during charging, it is easy to secure a contact point between the positive electrode active materials and to maintain an electron conduction path. On the other hand, in the all-solid-state battery, since there is no fluidity of the electrolyte as in the liquid-based battery, it is difficult to maintain the ion conduction path in a case where the positive electrode active material contracts. Therefore, even in a case where the fibrous conductive aid is used, sufficient improvement in cycle durability may not be obtained in some cases. In addition, it was found that the mechanical strength is not sufficient in the positive electrode active material layer prepared by a dry method using fibrous PTFE as a binder.

On the other hand, the positive electrode for an all-solid-state secondary battery according to the present embodiment has a composite of a film made of PTFE and a fibrous conductive aid in the positive electrode active material layer. With such a configuration, the fibrous conductive aid becomes a filler that makes the structure of PTFE tougher, and a structure with high strength can be obtained. The positive electrode for an all-solid-state secondary battery according to the present embodiment has high mechanical strength to the extent that it can exist as a free-standing film, and is excellent in handleability. In addition, by such an enhancement in strength, the amount of PTFE in the positive electrode active material layer can be reduced to achieve an increase in the energy density. Furthermore, the formation of the composite of the film-shaped PTFE and the fibrous conductive aid makes it easier to ensure contact between the particles of the positive electrode active material and the solid electrolyte even in a case where the positive electrode active material contracts during charging, as compared with a case where the fibrous binder and the fibrous conductive aid are present in a state of being non-complexed. Therefore, the composite of the film made of PTFE and the fibrous conductive aid can form not only an electron conduction path but also a high-strength ion conduction path capable of following expansion and contraction of the positive electrode active material accompanying charge and discharge. As a result, it is considered that the cycle durability can be further improved.

In addition, it is preferable that at least one of the positive electrode active material and the solid electrolyte be embedded in the composite, and it is more preferable that both the positive electrode active material and the solid electrolyte be embedded in the composite. As a result, the electron conduction path and the ion conduction path can be more effectively secured, and the effect of the present invention can be more remarkably obtained.

### <Method for Producing Positive Electrode for All-Solid-State Battery>

A method for producing a positive electrode for an all-solid-state battery of the present embodiment is not particularly limited as long as the specific composite can be formed in the positive electrode active material layer, and for example, it is preferable to include a step of rolling a mixture containing a positive electrode active material, a solid electrolyte, a fibrous conductive aid, and fibrous polytetrafluoroethylene while heating to 40°C or higher. In this step, the fibrous PTFE can be softened by heating to 40°C or higher. Then, by rolling in a heated state, the softened PTFE is crushed into a film-shaped form and cured. In this case, PTFE is cured in a state in which the fibrous conductive aid is kneaded into PTFE, whereby a structure of a composite of a film made of PTFE and the fibrous conductive aid can be obtained.

That is, one embodiment of the present invention is a method for producing a positive electrode for an all-solid-state battery including a positive electrode active material layer containing a positive electrode active material, a solid electrolyte, a binder containing polytetrafluoroethylene, and a fibrous conductive aid, the method including a step of rolling a mixture containing the positive electrode active material, the solid electrolyte, the fibrous conductive aid, and the polytetrafluoroethylene capable of fibrillation while heating to 40°C or higher.

In a preferred embodiment, the production method includes: (1) a mixing step of mixing a positive electrode active material, a fibrous conductive aid, and a solid electrolyte; (2) a kneading step of kneading a mixture obtained in the mixing step and polytetrafluoroethylene (PTFE) to fibrillate the PTFE; and (3) a thermal rolling step of rolling the mixture containing the positive electrode active material, the solid electrolyte, the fibrous conductive aid, and the polytetrafluoroethylene in fibrous form while heating to 40°C or higher.

### (Mixing Step)

In the mixing step, the positive electrode active material, the fibrous conductive aid, and the solid electrolyte are mixed. Specific embodiments of these components are as described above. The order of addition of the components is also not particularly limited. Mixing means is also not particularly limited, and a known method can be appropriately referred to.

In the mixing step, materials other than the positive electrode active material, the solid electrolyte, and the fibrous conductive aid (hereinafter, also referred to as "other materials") may be added and mixed as necessary. Examples of other materials include a non-fibrous conductive aid.

Mixing conditions are also not particularly limited. The mixing time is not particularly limited, and is, for example, 1 to 120 minutes.

The mixing step is preferably carried out in the absence of a solvent. As a result, solvent removal when forming the positive electrode active material layer becomes unnecessary. In addition, the reaction between the solid electrolyte and the solvent can be prevented. In addition, the mixing step is preferably performed under an inert gas atmosphere.

### (Kneading Step)

The production method according to the present embodiment preferably includes, after the mixing step, a kneading step of kneading the mixture obtained in the mixing step and polytetrafluoroethylene (PTFE). PTFE can be fibrillated (fiberized) by application of a shear force due to kneading. The positive electrode active material, the solid electrolyte, and the fibrous conductive aid are entangled and held in the fibrous structure of the fibrillated PTFE. Here, the timing of adding polytetrafluoroethylene (PTFE) is not particularly limited, and may be, for example, the time when the positive electrode active material, the solid electrolyte, and the fibrous conductive aid are put into a mixing container in the mixing step, or may be the time after the mixing step but before the kneading step. Among them, it is preferable to add polytetrafluoroethylene (PTFE) after the mixing step but before the kneading step, and this can suppress cutting of the fibrous conductive aid.

The kneading apparatus used for kneading is not particularly limited as long as a shear force is applied to PTFE, and an extruder, a Banbury mixer, a roller, a kneader, or the like can be appropriately adopted. In addition, kneading may be performed using a mortar.

Through the above steps, a mixture containing the positive electrode active material, the solid electrolyte, the fibrous conductive aid, and the fibrous PTFE is obtained. Note that, the mixture is preferably a powdery mixture substantially containing no liquid component. A content of the liquid component in the mixture is preferably 5 mass% or less, more preferably 3 mass% or less, still more preferably 1 mass% or less, even more preferably 0.5 mass% or less, particularly preferably 0.1 mass% or less, and most preferably 0 mass% with respect to 100 mass% of the mixture.

### (Thermal Rolling Step)

In the thermal rolling step, the mixture obtained in the kneading step and containing the positive electrode active material, the solid electrolyte, the fibrous conductive aid, and the fibrous PTFE is rolled while being heated to 40°C or higher
Rolling means is not particularly limited, and a known roller or the like can be used. In addition, a rolling apparatus such as a roll press machine may be used. Heating means is not particularly limited, and known heating means can be appropriately adopted, and a roll press machine with a heating mechanism or the like can be suitably used. Here, when a heating temperature is lower than 40°C, PTFE in the mixture is not sufficiently softened, and thus a composite is not formed. An upper limit value of the heating temperature is not particularly limited, and it is preferable that the heating temperature is 100°C or lower because a reaction between the components in the mixture and an SUS foil hardly occurs in a case where the mixture is rolled in a state of being sandwiched between two base materials such as SUS foils. The heating temperature is more preferably 40°C to 90°C, still more preferably 50°C to 90°C, still further preferably 55°C to 85°C, and particularly preferably 60°C to 80°C.

According to a preferred embodiment, the powder (kneaded product) obtained by the kneading step is rolled while being heated in a state of being sandwiched between two base materials such as SUS foils to be formed into a sheet shape having a thickness of 400 to 800 µm. Thereafter, it is preferable to perform a rolling treatment a plurality of times until the thickness of the positive electrode active material layer reaches a desired thickness so that the thickness of the sheet is gradually reduced while being heated. For example, the rolling treatment can be performed such that the thickness of the sheet is reduced by 50 to 100 µm each time. By performing the rolling treatment a plurality of times so that the thickness of the sheet is gradually reduced, it is possible to suppress an excessive increase in the density of the positive electrode and to improve the handleability. By the thermal rolling step, a sheet-like positive electrode active material layer having a predetermined composite structure can be obtained.

The thickness of the positive electrode active material layer varies depending on the configuration of the intended all-solid-state battery, and is, for example, preferably within a range of 0.1 to 1000 µm, and more preferably 40 to 100 µm.

[Positive Electrode Current Collecting Plate and Negative Electrode Current Collecting Plate] A material constituting the current collecting plate (25, 27) is not particularly limited, and a known highly conductive material conventionally used as a current collecting plate for a secondary battery can be used. As a constituent material of the current collecting plate, for example, a metal material such as aluminum, copper, titanium, nickel, stainless steel (SUS), or an alloy thereof is preferable. From the viewpoint of lightweight, corrosion resistance, and high conductivity, aluminum and copper are more preferable, and aluminum is particularly preferable. Note that, the same material or different materials may be used for the positive electrode current collecting plate 27 and the negative electrode current collecting plate 25.

[Positive Electrode Lead and Negative Electrode Lead] In addition, although not illustrated, the current collector and the current collecting plate may be electrically connected via a positive electrode lead or a negative electrode lead therebetween. As a constituent material of the positive electrode lead and the negative electrode lead, a material used in a known secondary battery can be similarly adopted. Note that, a portion taken out from an outer casing is preferably covered with a heat resistant and insulating heat shrinkable tube or the like so as not to affect a product (for example, automotive components, in particular electronic devices, and the like) due to electric leakage caused by contact with peripheral equipment, wiring, or the like.

[Battery Outer Casing Material] As a battery outer casing material, a known metal case can be used, and a bag-shaped case using a laminate film 29 containing aluminum, which can cover a power generating element as shown in Figs. 1 and 2, can be used. As the laminate film, for example, a laminate film having a three-layer structure formed by laminating PP, aluminum, and nylon in this order can be used, and the laminate film is not limited thereto. A laminate film is desirable from the viewpoint that it has high output and excellent cooling performance and can be suitably used for batteries for large devices for EV and HEV. In addition, since the group pressure applied to the power generating element from the outside can be easily adjusted, the outer casing body is more preferably a laminate film containing aluminum.

Although one embodiment of the all-solid-state battery of the present invention has been described above, the present invention is not limited to only the configuration described in the above-described embodiment, and can be appropriately changed based on the description of the claims.

Note that the following embodiments are also included in the scope of the present invention: the positive electrode for an all-solid-state battery according to claim 1, having the features of claim 2; the positive electrode for an all-solid-state battery according to claim 1 or 2, having the feature of claim 3; the positive electrode for an all-solid-state battery according to any one of claims 1 to 3, having the feature of claim 4; an all-solid-state battery including the positive electrode for an all-solid-state battery according to any one of claims 1 to 4.

### Examples

Hereinafter, the present invention will be described in more detail with reference to Examples. However, the technical scope of the present invention is not limited only to the following examples. Note that, in the following, instruments, devices, and the like used in a glove box were sufficiently dried in advance.

### <Preparation of Positive Electrode Active Material Layer>

[Comparative Example 1] In a glove box in an argon atmosphere with a dew point of - 68°C or lower, an NMC composite oxide (LiNi_{0.8}Mn_{0.1}Co_{0.1}O₂, average particle diameter (D50): 6 µm) as a positive electrode active material, carbon nanotubes having an average fiber length of 20 µm as a conductive aid, and an argyrodite type sulfide solid electrolyte (Li₆PS₅Cl, average particle diameter (D50): 1 µm) as a solid electrolyte were weighed so as to have a mass ratio of 70:5:25, and mixed using an agate mortar. 0.5 parts by mass of polytetrafluoroethylene (PTFE) as a binder were added to 100 parts by mass of the resulting mixed powder and lightly kneaded, and then kneaded in a mortar for 2 minutes while a shear force was applied. Here, a content of PTFE in the positive electrode active material layer was 0.5 mass% with respect to the total solid content contained in the positive electrode active material layer. After confirming that PTFE was fibrillated, the obtained kneaded product was formed into a sheet shape using a hand roller in an atmosphere of 25°C to obtain a positive electrode active material layer (thickness: 150 µm) of this comparative example.

[Comparative Examples 2 and 3] Positive electrode active material layers of Comparative Examples 2 and 3 were obtained in the same manner as in Comparative Example 1 except that the addition amount of PTFE was changed to 0.8 parts by mass and 1.0 parts by mass, respectively, with respect to 100 parts by mass of the mixed powder in Comparative Example 1. Here, the contents of PTFE in the positive electrode active material layer were 0.8 mass% and 1.0 mass% with respect to the total solid content contained in the positive electrode active material layer, respectively.

[Example 1] In a glove box in an argon atmosphere with a dew point of -68°C or lower, an NMC composite oxide (LiNi_{0.8}Mn_{0.1}Co_{0.1}O₂, average particle diameter (D50): 6 µm) as a positive electrode active material, carbon nanotubes having an average fiber length of 20 µm as a conductive aid, and an argyrodite type sulfide solid electrolyte (Li₆PS₅Cl, average particle diameter (D50): 1 µm) as a solid electrolyte were weighed so as to have a mass ratio of 70:5:25, and mixed using an agate mortar. 0.5 parts by mass of polytetrafluoroethylene (PTFE) as a binder were added to 100 parts by mass of the resulting mixed powder and lightly kneaded, and then kneaded in a mortar for 2 minutes while a shear force was applied. Here, a content of PTFE in the positive electrode active material layer was 0.5 mass% with respect to the total solid content contained in the positive electrode active material layer. After confirming that PTFE was fibrillated, the obtained kneaded product was formed into a sheet shape using a hand roller while being heated on a hot plate at 80°C, and stretched to a thickness of 600 µm. Thereafter, the heat-stretched sheet-shaped molded body was rolled using a tabletop roll press machine in a state where a roll surface temperature was 80°C while reducing a gap by 50 µm each time over nine passes until the thickness finally reached 150 µm to obtain a positive electrode active material layer of the present example.

[Examples 2 and 3] Positive electrode active material layers of Examples 2 and 3 were obtained in the same manner as in Example 1 except that the addition amount of PTFE was changed to 0.8 parts by mass and 1.4 parts by mass, respectively, with respect to 100 parts by mass of the mixed powder in Example 1. Here, the contents of PTFE in the positive electrode active material layer were 0.8 mass% and 1.4 mass% with respect to the total solid content contained in the positive electrode active material layer, respectively.

[Example 4] A positive electrode active material layer of the present example was prepared in the same manner as in Example 2 except that carbon nanotubes having an average fiber length of 16 µm were used as a conductive aid.

[Example 5] A positive electrode active material layer of the present example was prepared in the same manner as in Example 2 except that carbon nanotubes having an average fiber length of 25 µm were used as a conductive aid.

[Example 6] A positive electrode active material layer of the present example was prepared in the same manner as in Example 2 except that carbon nanotubes having an average fiber length of 2 µm were used as a conductive aid.

[Comparative Example 4] A positive electrode active material layer of the present comparative example was prepared in the same manner as in Comparative Example 2 except that carbon nanotubes having an average fiber length of 2 µm were used as a conductive aid.

### <Observation of Composite of Film Made of PTFE and Fibrous Conductive Aid>

For the positive electrode active material layer prepared in each of Examples and Comparative Examples, in order to observe a composite of a film made of PTFE and a fibrous conductive aid, the positive electrode active material layer was treated with hydrochloric acid to remove the positive electrode active material and the solid electrolyte. Specifically, the positive electrode active material layer was immersed in 35% hydrochloric acid at 25°C for 4 hours. Thereafter, the hydrochloric acid was removed by washing with pure water three times, air-dried, and then vacuum-dried at 45°C for 4 hours to obtain a sample after the hydrochloric acid treatment, and the sample was subjected to SEM observation.

Fig. 3 shows SEM images of samples of the positive electrode active material layers prepared in (a) Comparative Example 2 and (b) Example 2 after hydrochloric acid treatment. Figs. 3(a) and 3(b) are photographs observed in a direction perpendicular to the surface of the positive electrode active material layer, respectively. As shown in Fig. 3(a), in the positive electrode active material layer prepared in Comparative Example 2, a fibrous conductive aid and fibrous PTFE are observed. However, in the positive electrode active material layer prepared in Comparative Example 2, a composite of a film made of PTFE and a fibrous conductive aid was not observed. In addition, a relatively large number of space portions that appeared dark in the image were observed. On the other hand, as shown in Fig. 3(b), in the positive electrode active material layer prepared in Example 2, PTFE exists densely on the surface (in a film shape). Then, a composite of a film made of PTFE and a fibrous conductive aid was confirmed. Similarly, also in the positive electrode active material layers prepared in Examples 1 and 3 to 6, a composite of a film made of PTFE and a fibrous conductive aid was confirmed. On the other hand, the composite was not confirmed in the positive electrode active material layers prepared in Comparative Examples 1, 3, and 4.

### <Tensile Test of Positive Electrode Active Material Layer>

The positive electrode active material layer prepared in each of Examples and Comparative Examples was subjected to a tensile test in accordance with JIS K 6251:2017, and the breaking strength was measured. The positive electrode active material layer was punched into a dumbbell shape to obtain a test piece, and a tensile test was performed at room temperature at a tensile speed of 10 mm/min using a universal testing machine manufactured by IMADA CO., LTD. The width and thickness of the dumbbell portion of the test piece were measured and the breaking strength of the positive electrode active material layer was determined. The results are shown in Table 1 below.

### <Charge and Discharge Test>

Using the positive electrode active material layers prepared in Example 4 to 6 and Comparative Example 4, evaluation cells were prepared as follows, and a charge and discharge test was performed.

### (Preparation of Laminate of Solid Electrolyte Layer and Negative Electrode Current Collector)

In a glove box in an argon atmosphere with a dew point of -68°C or lower, 95 parts by mass of an argyrodite type sulfide solid electrolyte (Li₆PS₅Cl, average particle diameter (D50) 1 µm) as a solid electrolyte and 5 parts by mass of styrene-butadiene rubber (SBR) as a binder were dispersed using 1,3,5-trimethylbenzene as a solvent so that the solid content was 47 mass%. Note that, as the binder, a binder was used which had been adjusted in advance to have a concentration of 6 mass% using 1,3,5-trimethylbenzene. The obtained dispersion was stirred at 1000 rpm for 3 minutes using a planetary centrifugal mixer to prepare a slurry. The obtained slurry was applied onto a negative electrode current collector (made of SUS430, thickness 10 µm) so as to have a film thickness of 40 µm after drying, and the solvent was dried on a hot plate at 80°C for 30 minutes to obtain a laminate of the solid electrolyte layer and the negative electrode current collector.

### (Joining of Positive Electrode Current Collector, Positive Electrode Active Material Layer, and Laminate of Solid Electrolyte Layer and Negative Electrode Current Collector)

The laminate of the solid electrolyte layer and the negative electrode current collector prepared above was punched into a square of 25 mm × 25 mm using a punching machine of 25 mm × 25 mm (corner R = 1 mm) manufactured by NOGAMI GIKEN Co., Ltd. The positive electrode active material layer prepared above was punched into a square of 20 mm × 20 mm using a punching machine of 20 mm × 20 mm (corner R = 1 mm) manufactured by NOGAMI GIKEN Co., Ltd. In addition, aluminum as a positive electrode current collector was punched into a square of 25 mm × 25 mm using a punching machine of 25 mm × 25 mm (corner R = 1 mm) manufactured by NOGAMI GIKEN Co., Ltd. The positive electrode active material layer was placed on the positive electrode current collector, and the laminate of the solid electrolyte layer and the negative electrode current collector was laminated thereon such that the solid electrolyte layer and the positive electrode active material layer were adjacent to each other to obtain a power generating element. The power generating element was put in a 35 mm × 35 mm laminate film bag and subjected to sealing with a vacuum sealer. The above was subjected to isostatic pressing (CIP) at 80°C and 500 MPa for 1 minute. Note that, the film thickness of the solid electrolyte layer after CIP was 20 µm. As a result, the interfaces between the positive electrode current collector, the positive electrode active material layer, the solid electrolyte layer, and the negative electrode current collector were joined to obtain an evaluation cell which is a lithium-deposition type all-solid-state battery.

### (Charge and Discharge Test)

The evaluation cell prepared above was subjected to the following charge and discharge test. The charge and discharge test was performed while a restraint pressure of 3 MPa was applied in the stacking direction of the evaluation cell using a pressing member. First, the evaluation cell was charged at 0.01 C for 5 seconds, and then left standing in a thermostatic chamber at 60°C for 5 hours to set the temperature of the cell to 60°C. The cell was charged with a constant current corresponding to 0.05 C, and at the time when the cell voltage reached 4.2 V, the charging was switched to a constant voltage mode, and after the current value corresponded to 0.01 C, a pause was performed for 0.5 hours. Thereafter, the cell was discharged at a constant current corresponding to 0.05 C, discharging was performed until the cell voltage reached 2.5 V, and then a pause was performed for 0.5 hours. This cycle was taken as 1 cycle, and 10 cycles of charge and discharge were performed. The discharge capacity up to 10 cycles was measured, the percentage (%) of the discharge capacity at 10th cycle to the discharge capacity at the first cycle was calculated, and the obtained value was taken as a capacity retention rate. The results are shown in Table 1 below.

### [Table 1]

**Table 1**

| | Average particle diameter of positive electrode active material (µm) | Average fiber length of fibrous conductive aid (µm) | PTFE content (mass%) | Rolling temperature (°C) | Film made of PTFE/fibrous conductive aid composite | Tensile strength of positive electrode active material layer (MPa) | Capacity retention rate (%) |
|---|---|---|---|---|---|---|---|
| Comparative Example 1 | 6 | 20 | 0.5 | 25 | Absent | 0.08 | - |
| Comparative Example 2 | 6 | 20 | 0.8 | 25 | Absent | 0.17 | - |
| Comparative Example 3 | 6 | 20 | 1.0 | 25 | Absent | 0.26 | - |
| Example 1 | 6 | 20 | 0.5 | 80 | Present | 0.32 | - |
| Example 2 | 6 | 20 | 0.8 | 80 | Present | 0.45 | - |
| Example 3 | 6 | 20 | 1.4 | 80 | Present | 0.85 | - |
| Example 4 | 6 | 16 | 0.8 | 80 | Present | 0.40 | 96 |
| Example 5 | 6 | 25 | 0.8 | 80 | Present | 0.52 | 97 |
| Example 6 | 6 | 2 | 0.8 | 80 | Present | 0.32 | 93 |
| Comparative Example 4 | 6 | 2 | 0.8 | 25 | Absent | 0.15 | 80 |

From the results shown in Table 1, the positive electrodes of Examples 1 to 6 each having a structure of a composite of a film made of PTFE and a fibrous conductive aid have higher strength than the positive electrodes of Comparative Examples 1 to 4 not including the composite. In addition, it was found that the batteries using the positive electrodes of Examples 4 to 6 have improved cycle durability as compared with the case of using the positive electrode of Comparative Example 4. In addition, Comparison of Examples 4 to 6 showed that Examples 4 and 5 in which the average fiber length of the fibrous conductive aid was larger than the average particle diameter (D50) of the positive electrode active material had higher strength and more excellent cycle durability than those of Example 6.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film

## Claims

1. A positive electrode for an all-solid-state battery comprising a positive electrode active material layer containing a positive electrode active material, a solid electrolyte, a binder containing polytetrafluoroethylene, and a fibrous conductive aid,
wherein the positive electrode active material layer includes a composite of a film made of the polytetrafluoroethylene and the fibrous conductive aid.

2. The positive electrode for an all-solid-state battery according to claim 1, wherein at least one of the positive electrode active material and the solid electrolyte is embedded in the composite.

3. The positive electrode for an all-solid-state battery according to claim 1 or 2, wherein an average fiber length of the fibrous conductive aid is larger than an average particle diameter (D50) of the positive electrode active material.

4. The positive electrode for an all-solid-state battery according to claim 1 or 2, wherein the positive electrode active material layer further contains a non-fibrous conductive aid

5. An all-solid-state battery comprising the positive electrode for an all-solid-state battery according to claim 1 or 2.

6. A method for producing a positive electrode for an all-solid-state battery including a positive electrode active material layer containing a positive electrode active material, a solid electrolyte, a binder containing polytetrafluoroethylene, and a fibrous conductive aid, the method comprising:
a step of rolling a mixture containing the positive electrode active material, the solid electrolyte, the fibrous conductive aid, and the polytetrafluoroethylene capable of fibrillation while heating to 40°C or higher.
